# EUROPEAN PATENT SPECIFICATION

(11) **EP 0 658 288 B1**
(45) Date of publication and mention of the grant of the patent: **11.12.2002**
(21) Application number: 94908853.8
(22) Date of filing: 25.08.1993
(51) Int. Cl.: H02B 1/52, H02J 7/02, H01R 33/95, H01R 13/453, H01R 13/713, A47J 27/21

(54) **CONNECTION SYSTEM FOR CORDLESS ELECTRICAL WATER HEATING APPLIANCE**
VERBINDUNGSSYSTEM FÜR SCHNURLOSEN ELEKTRISCHEN WASSERERHITZER
SYSTEME DE CONNEXION POUR UN APPAREIL ELECTRIQUE MENAGER SANS FIL DESTINE A CHAUFFER DE L'EAU

(30) Priority: 02.09.1992 GB 9218663; 29.01.1993 GB 9301827
(43) Date of publication of application: 21.06.1995
(60) Divisional application: 98204246.7
(73) Proprietor: OTTER CONTROLS LIMITED, Buxton, Derbyshire SK17 6LA (GB)
(72) Inventor: O'NEILL, Robert Andrew, Buxton, Derbyshire SK17 9NQ (GB); GAETA, Antonio Martin, Buxton, Derbyshire (GB); WHITE, Ian Geoffrey, Fairfield, Buxton, Derbyshire (GB); BROOK, Stephen Roger, Buxton, Derbyshire SK17 7BW (GB); HARRISON, Ronald Brian, Nr. Buxton, Derbyshire SK17 8LQ (GB); Taylor, Brian James, Boxton, Derbyshire SK17 6HS (GB)
(74) Representative: Milhench, Howard Leslie
(86) International application number: GB9301814
(87) International publication number: WO94006185

(56) References cited:
- EP-A- 0 148 458
- EP-A- 0 239 254
- EP-A- 0 254 482
- WO-A-89/07394
- WO-A-92/05604
- DE-C- 451 305
- GB-A- 709 389
- GB-A- 1 433 685
- GB-A- 2 037 505
- GB-A- 2 183 154
- GB-A- 2 222 025
- GB-A- 2 251 986
- TW-U- 32 591
- US-A- 3 398 260
- US-A- 4 979 205
- US-A- 5 035 024

## Description

### Field of the Invention:

This invention generally concerns improvements relating to electrical appliances and connectors therefor and more particularly relates to an improved connection system for so-called "cordless" electrical water heating appliances such as electric kettles and hot water jugs in which power is supplied to a liquid heating vessel via a base unit coupled to the electrical supply, there being co-operating electrical connectors on the base unit and the vessel for powering a heating element of the vessel via the base.

### Background of the Invention:

Cordless appliances generally have a socket outlet provided in or on the base unit and a mating connecting inlet in or on the appliance proper, and generally require fairly precise alignment between these two parts in order to connect the appliance proper to the base. The connecting inlet of the appliance proper commonly comprises a set of male terminal pins which are adapted to mate with a complementary set of female terminals provided in a shrouded portion of the base unit, and the base unit terminals are commonly provided in an upstand formed on the base unit and adapted to locate in a generally complementary recess formed in the body of the appliance proper for providing the degree of alignment between the respective parts that is necessary to ensure correct mating of the two parts of the connection system. An exemplary cordless connection system of this kind is disclosed in our British Patent Application No. 9102099.0 (GB-A-2 241 390). An alternative system in which the terminal pins are provided in the base unit and complementary spring terminals are provided in the appliance proper is disclosed in our British Patent Application No. 9018502.6 (GB-A-2 236 220).

The requirement that the appliance proper and the base unit should mate with each other only in a predetermined single orientation is a restriction upon the freedom of the appliance designer to achieve the desired product form and also presents some inconvenience to users of the appliance. It has previously been recognized that an excessive requirement for alignment of the appliance proper with the base unit is undesirable and in British Patent No. GB-B-2 221 104 (Strix Ltd.) there is disclosed a cordless connection system which is generally conventional but is adapted to accommodate a degree of initial misalignment of the appliance proper with the base.

It has also been known since 1968 (US 3,398,260 A) to provide a cordless electric smoothing iron in which the iron and its stand have current-conducting members which permit the iron to be supported on end in any orientation with respect to the stand. A pair of concentric annular conductors in the base of the iron engage corresponding conductors in the stand. However, an electric smoothing iron is not an electrical water boiling appliance.

### Objects and Summary of the Invention:

It is the principal object of the present invention to provide a connection system for cordless electrical water heating appliances which enables the vessel part of the appliance to be set down onto its base in any relative orientation and furthermore provides for overtemperature protection of the heating element of the vessel.

According to the present invention there is provided a cordless electrical water boiling appliance comprising: a vessel provided with a heating element for heating water in the vessel to boiling and with an overtemperature disconnect device associated with said heating element for disconnecting the heating element from its power supply in an element overtemperature situation, a base for connection to an electrical power supply, an electrical connector provided on the base and a complementary electrical connector, formed as an integral part of said overtemperature disconnect device, provided on the vessel, whereby, in dependence upon the condition of said overtemperature disconnect device the heating element in the vessel can be powered via the base when the vessel is seated on the base and said connectors are connected to each other, said electrical connectors constituting an electrical connection system permitting the vessel to be operatively coupled to the base throughout a full 360° of relative rotational orientation between the respective parts, said electrical connection system comprising, on one of the two connectors, first and second annular electrical terminal parts arranged concentrically with respect to each other and a third terminal part generally centrally of the first and second terminal parts, and the other of the two connectors having complementary spring terminal parts adapted to engage the terminal parts of the first-mentioned connector.

We are aware of Taiwan Utility Model Application No. 6823843 (published as Utility Model 32591 in the Taiwan Patent Gazette of 1 August 1980) which appears at first sight to disclose a cordless liquid heating vessel having a connector system permitting the vessel part to be set down onto the base in any relative orientation. However, the disclosure of the document in this regard is not clear and unambiguous, no heating element overtemperature protection device integrated with the connector on the vessel is described, and the vessel that is disclosed is not considered to be a water boiling vessel.

The cordless connection system of the present invention is preferably a shuttered system wherein the electrical connector that is provided on the base is a shuttered electrical connector.

The external form of the electrical connectors could advantageously be shaped to facilitate mating of the two connectors by guiding them together once they were imprecisely engaged with each other.

In accordance with an embodiment of the present invention, described in detail hereinafter, the connection system includes a shutter having rotational symmetry which is arranged to be opened by movement in relation to co-operating parts in a predetermined direction, such movement being possible only if the shutter has a predetermined disposition relative to at least one co-operating part and the shutter and/or such co-operating part(s) being configured to permit alternative disposition of the shutter. With such a shutter provided in one part of a two part complementary connector system, the other part would be provided with means to ensure displacement of the shutter with the shutter held in the requisite disposition for opening of the same.

More generally, the abovementioned embodiment of the present invention comprises a plug part and a socket part, the plug part being insertable into the socket part by relative movement between the two parts in a predetermined direction irrespective of the relative rotational orientation of the two parts transversely to said predetermined direction, and a shutter being provided in the socket part and being displaceable therein for admitting the plug part only if the shutter has a predetermined disposition, the shutter being capable of adopting alternative dispositions within the socket part, and the plug part being formed so as to hold the shutter in said predetermined disposition so long as the plug part and socket part are approached to each other in said predetermined direction.

In this embodiment, the shutter includes a circularly-cylindrical part which is axially displaceable, against a spring bias, within a second circularly-cylindrical part so long as the axes of the two cylindrical parts have a predetermined relative disposition, namely they are coaxial or very nearly so. The shutter and the second cylindrical part are, however, constructed so as to permit the shutter to be tilted and it is arranged that the shutter then cannot be opened by being displaced into the second cylindrical part. The shutter and the second circularly-cylindrical part are both incorporated into one connector part of the system, and the other part includes a circularly-cylindrical part adapted for displacing the shutter in the requisite direction while holding it in the requisite disposition. Any effort to open the shutter which does not simultaneously ensure that it is held in the requisite opening disposition will cause it to tilt thereby preventing it from being opened. The two connector parts, so long as they are brought together in the requisite degree of coaxial orientation for effecting opening of the shutter, are capable of being connected together within the full 360° range of relative rotational orientation and there is no requirement to effect rotary alignment of the two parts.

The foregoing and further aspects of the present invention are set forth in the appended claims and will best be understood from consideration of the following detailed description of an exemplary embodiment of the invention which is illustrated in the accompanying drawings.

### Description of the Drawings:

Figure 1 is an axially exploded view of an exemplary connector socket part constructed and arranged in accordance with an embodiment of the present invention;
Figure 2A shows the connector socket part of Figure 1 in assembled condition and with its component parts shown in enlarged sectional side elevation view, and Figure 2B shows a sectional side elevation view of an exemplary connector plug part adapted to be mated with the socket part of Figure 2A;
Figure 3 shows the connector socket and plug parts of Figures 2A and 2B in engaged condition;
Figure 4 is a view similar to Figure 2A and illustrating the operation of the shutter mechanism incorporated into the connector socket part; and
Figure 5 is a perspective view of the connector socket part illustrating water shedding features incorporated into its upper parts.

### Detailed Description of the Embodiments:

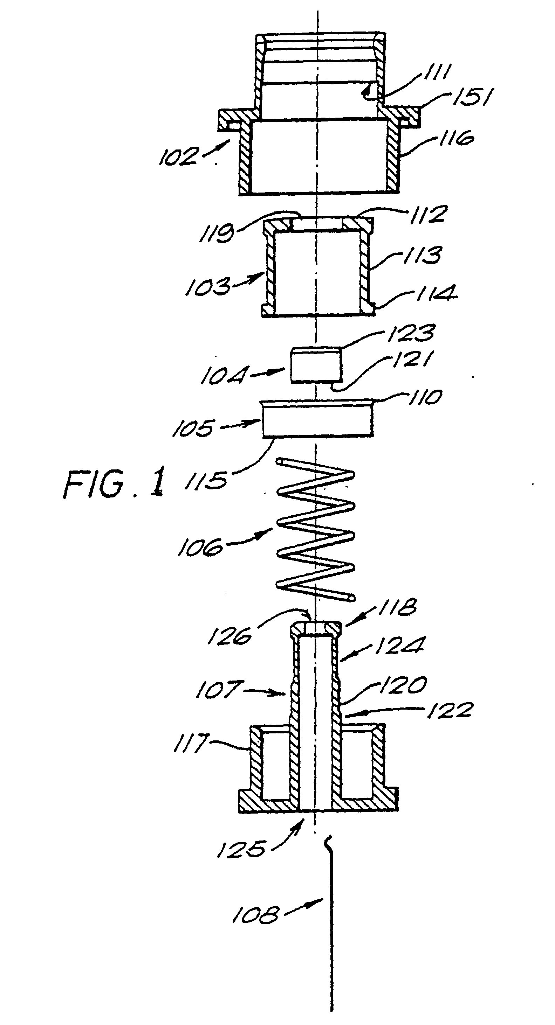

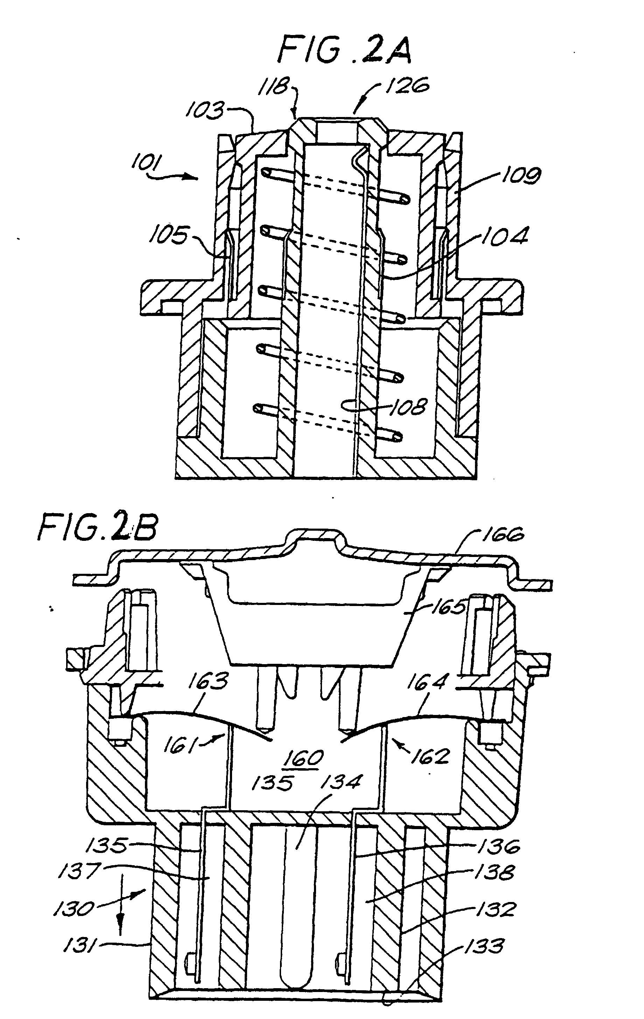

Referring now to Figures 1 and 2A, the connector socket part of an embodiment is generally designated 101 and is formed of a number of generally circularly-cylindrical components which assemble together to form a socket having rotational symmetry in a plane transverse to the axial direction of the components, which corresponds to the direction in which the plug and socket parts of the connector are moved to mate the two connector parts. The components of the socket part comprise a moulded plastics main housing 102, a moulded plastics shutter 103, first and second electrical contact rings 104 and 105, a spiral spring 106, a moulded plastics base 107 and a spring contact finger 108.

As best shown in Figure 2A, the larger diameter contact ring 105 fits within an upper part 109 of the main housing 102 which is dimensioned to make close contact with an outwardly turned upper edge 110 of the contact ring 105 which abuts a shoulder 111 formed in the main housing 102. The shutter 103 fits loosely within the main housing 102 so as to be axially moveable with a degree of freedom to tilt as will be explained below, and comprises an annular head portion 112, a cylindrical portion 113 and an outwardly extending flange 114 which abuts the lower edge 115 of the contact ring 105 to prevent the shutter from moving out of the main housing. The main housing 102, with the contact ring 105 and shutter 103 installed, fits onto the base 107 with a cylindrical lower part 116 of the main housing fitting closely over an upstanding cylindrical part 117 of the base and a hollow central post 118 of the base extending upwards through the central opening 119 provided in the head of the shutter 103.

The lesser diameter contact ring 104 fits tightly onto an appropriately dimensioned part 120 of the post 118 with its lower edge 121 abutting a shoulder 122 provided on the post, and the upper edge 123 of the ring 104 is turned inwardly so as to conform to the lower extremity of an undercut portion 124 of the post 118. The spring contact finger 108 extends within the central hollow 125 of the post 118 and an opening 126 is provided in the top of the post for admitting a terminal pin to the interior of the post for electrically contacting the contact finger 108.

Figure 2B shows an exemplary form of overtemperature disconnect device, suitable for use with a water boiling appliance such as a kettle or hot water jug for example, the device including a connector plug part adapted for use with the connector socket part of Figures 1 and 2A. The connector plug part is generally designated 130 and comprises a plastics moulding formed with an outer circularly-cylindrical wall 131 dimensioned to make a relatively close fit over the upper part 109 of the main socket housing 102, and an inner circularly-cylindrical wall 132 dimensioned to make a relatively close fit into the space occupied by the shutter 103 of the socket between the central post 118 and the radially inner surface of the socket part 109, the lower edge 133 of the inner wall 132 serving to depress the shutter 103 when the plug is correctly inserted into the socket in the axial direction. A central, axially extending terminal pin 134 is mounted in the plug part 130 and is adapted to extend into the opening 126 provided in the top of the central post 118 of the connector socket and to make electrical contact with the spring finger 108, and first and second spring terminals 135 and 136 each carrying an electrical contact at its free end are cantilevered within the plug part 130 in registry with respective grooves 137 and 138 provided in the outer and inner surfaces respectively of the inner wall 132 of the plug, the grooves 137 and 138 providing space for the respective spring terminals 135 and 136 to flex.

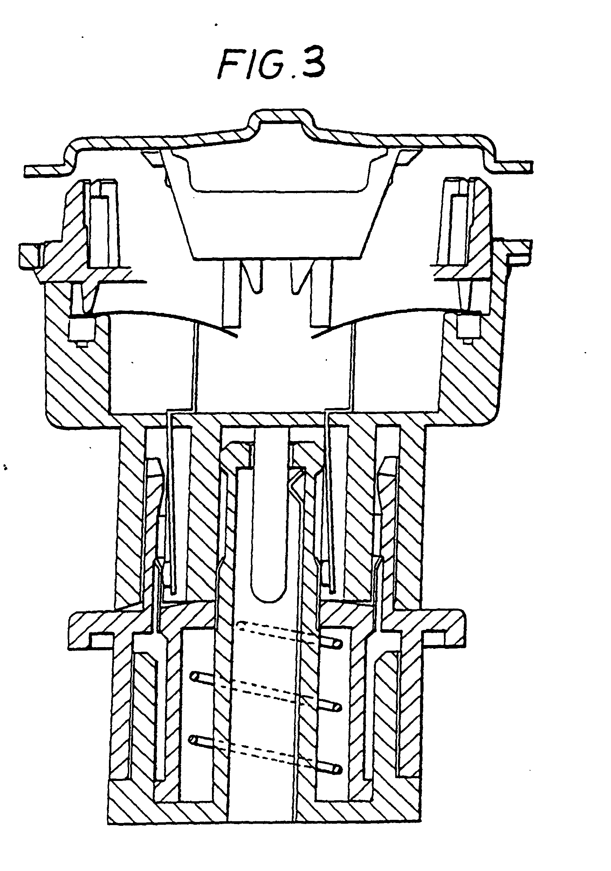

Figure 3 shows the connector plug part 130 of Figure 2B mated with the connector socket part 101 of Figure 2A, the mating of the two parts being effected by moving them together in the axial direction as indicated by the arrow shown in Figure 2B. It will be seen from Figure 3 that the central terminal pin 134 of the plug part makes electrical contact with the spring finger 108 of the socket part, that the contact provided at the free end of spring terminal 135 of the plug part makes electrical contact with the outer contact ring 105 of the socket part, and that the contact provided at the free end of spring terminal 136 of the plug part makes electrical contact with the inner contact ring 104 of the socket part. The shutter 103 in the socket part is depressed against the bias of the spring 106 by the lower edge 133 of the wall 132 of the plug part, and will be restored to its closed condition as shown in Figure 2A by the action of the spring 106 when the plug part 130 is withdrawn from the socket part 101, abutment of the upper surface of the flange 114 on the shutter 103 with the lower edge 115 of the outer contact ring 105 limiting the range of upward movement of the shutter in the plug socket part.

As mentioned previously, an undercut 124 (namely a portion of lesser diameter) is provided on the central post 118 of the socket part 101 just above the location of the contact ring 104. A similar undercut is defined within the upper part 109 of the main socket moulding 102 just above the location of the contact ring 105. The purpose of these undercuts is to prevent the contacts provided on the spring terminals 135 and 136 of the plug part dragging on the respective surfaces of the socket part during insertion and withdrawal of the plug part and possibly leaving metallic tracks on the surfaces. Such tracks would be electrically conductive and would represent an electrical hazard. The undercuts also reduce wear on the electrical contacts which may, for example, be formed of silver. The contact rings 104 and 105 are preferably formed of copper or a copper alloy having a thermal conductivity at least 90% of that of copper and provided with a thick (e.g. 50µm) surface plating of a silver antimony alloy as described in GB-A-2253097, and the terminal pin 134 may be similarly formed.

It will be seen that the plug and socket parts of the connector of Figures 1 to 5 have rotational symmetry in a plane transverse to the axial direction of their insertion one into the other as depicted by the arrow shown in Figure 2B. Namely, apart from the spring 106 and the spring terminals 135 and 136, all of the component parts of the plug and socket are generally circular in transverse cross-section, transverse that is to the axial direction. The fact that this is so enables the plug part of the connector to be introduced into the socket part throughout a full 360° of relative rotation between the parts.

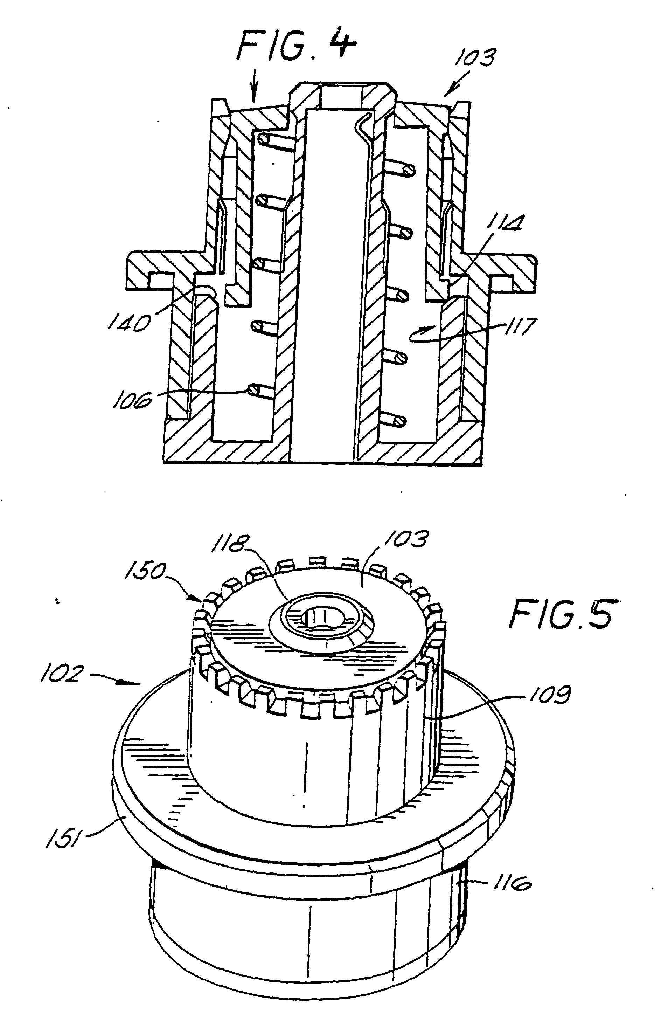

Referring to Figure 4, this is a view of the socket part of the connector which is very similar to Figure 2A, but illustrates the locking action of the shutter in the event that it is subject to a force which is not applied uniformly throughout the full extent of its annular upper surface. In order to meet safety requirements, it must not be possible to gain access to live parts within the socket by depressing the shutter with a test or human finger and, as shown in Figure 4, the arrangement of the shutter 103 is such that if it is depressed at a single point, as shown by the arrow, then it rocks upon the supporting spring 106 and its lower rim engages the upper edge of the cylindrical upstand 117 which prevents downwards movement of the shutter. The shutter can only be depressed into the socket by application to the top of the shutter of a force which is more or less uniform throughout the annular extent of the shutter head so that the shutter is maintained in coaxial alignment with the socket and its flange 114 can slide down within the cylindrical upstand 117. The underside of the inner wall 132 of the plug part can provide such a uniform force so long as the plug and socket parts are sufficiently well aligned in the axial direction. As shown, the inner edge of the top of the upstand 117 has a chamfer and, by selection of the angle of this chamfer and the radial clearance between the shutter flange 114 and the inner surface of the upstand 117, it is possible to achieve a satisfactory range of angle of approach of the plug to the socket whilst maintaining the electrical safety provided by the shutter.

The engaging surfaces of the shutter and the upstand 117, that is to say the surfaces which engage to prevent depression of the shutter when a nonuniform force is applied which causes it to tilt, could be curved so as to have a ball-and-socket type of co-operation allowing smooth disengagement of the locked shutter as the plug is brought into proper alignment for entry into the socket. By provision of such curved surfaces, the appliance proper part of a cordless appliance could be placed casually onto its base and smooth engagement between the plug and socket parts of the connector system would still be achieved.

Referring now to Figure 5 and back to Figure 2A, it will be seen that the top edge of the main housing 102 of the socket part 101 of the subject connector is provided with shaped castellations 150 designed to allow water to drain from the top surface of the socket whilst providing an inwardly facing guiding surface to enhance the engagement guidance of the plug 130 into the socket. As shown in Figure 2A, the inner surface of each castellation upstand forms part of a female conical annulus which acts to guide the bottom surface 133 of the inner wall 132 of the plug into contact and alignment with the top of the shutter 103, and also serves as a lead in for the contact provided at the end of spring terminal 135. The surfaces between the castellation upstands form part of a male conical annulus which slopes outwards and downwards to encourage any water spilled onto the top surface of the shutter to escape between the castellation upstands rather than penetrate to the interior of the socket. The main housing 102 is further provided with a skirt 151 which forms a water shedding feature designed to overlap an aperture in a cordless appliance base, for example, in which the socket is mounted.

The overtemperature disconnect device shown in Figure 2B is a modified form of the device described in GB-A-2194099 with reference to Figures 3A, 3B and 3C thereof and is illustrated herein in schematic form merely by way of an example of the way in which the plug part of the subject connector could be utilized. As illustrated in Figure 2A hereof the upper ends 161 and 162 of the spring terminals 135 and 136 in the plug portion 130 of the device extend into a switch enclosure 160 where they are engaged by respective electrically conductive springs 163 and 164 which are biassed into engagement with the terminal ends 161 and 162 by a moulded plastics material member 165 which corresponds to the thermally-collapsible carrier 121 shown in Figures 3A, 3B and 3C of GB-A-2194099 abovementioned.

Although not shown in Figure 2A, reference to GB-A-2194099 will show that the contact between the springs 163 and 164 and the terminal ends 161 and 162 is necessary in order that power can be supplied through the overtemperature disconnect device to an electrical heating element comprising a resistance heating element proper and an element head plate, the head plate of the heating element being shown in Figure 2B at 166. The member 165 stands on the head plate 166 as shown and, in the event of an overtemperature condition, the member 165 thermally deforms under the action of the spring 163 and 164 thereby breaking the connections made between the springs 163 and 164 and the terminal ends 161 and 162 and interrupting the supply of power to the heating element. As described in GB-A-2194099, the member 165 can serve to carry a bimetallic element in close thermal contact with the element head plate 166, the bimetallic element serving to open a set of contacts provided in the power supply line to the heating element in the event of an element overtemperature condition, the thermally induced collapse of the member 165 then serving a secondary or back-up function in the event, however unlikely, that the primary protective function provided by the bimetal and its associated contacts set fails to operate.

## Claims

1. A cordless electrical water boiling appliance comprising: a vessel provided with a heating element for heating water in the vessel to boiling and with an overtemperature disconnect device (160) associated with said heating element for disconnecting the heating element from its power supply in an element overtemperature situation, a base for connection to an electrical power supply, an electrical connector (Fig 1; Fig 2A) provided on the base and a complementary electrical connector (Fig 2B), formed as an integral part of said overtemperature disconnect device, provided on the vessel, whereby, in dependence upon the condition of said overtemperature disconnect device (160) the heating element in the vessel can be powered via the base when the vessel is seated on the base and said connectors are connected to each other, said electrical connectors constituting an electrical connection system permitting the vessel to be operatively coupled to the base throughout a full 360° of relative rotational orientation between the respective parts, said electrical connection system comprising, on one of the two connectors, first and second annular electrical terminal parts (104,105) arranged concentrically with respect to each other and a third terminal part (108) generally centrally of the first and second terminal parts, and the other of the two connectors having complementary spring terminal parts (134,135,136) adapted to engage the terminal parts (104,105) of the first-mentioned connector.

2. An appliance as claimed in claim 1 wherein the electrical connectors that are provided on the base and on the vessel are generally centrally positioned under the vessel and on the upper side of the base.

3. An appliance as claimed in any preceding claim wherein the electrical connectors provided on the base (Fig 2A) and on the vessel (Fig 2B) comprise live, neutral and earth terminal parts (104,105,108;134,135,136) arranged such that the co-operating earth terminal parts (108;134) engage first when the vessel is placed on its base and disengage last when the vessel is removed from its base.

4. An appliance as claimed in any preceding claim wherein said electrical connectors are shaped externally to facilitate their mating by guiding them together once they are imprecisely engaged.

5. An appliance as claimed in any preceding claim wherein the electrical connector (Fig 1; Fig 2A) that is provided on the base is a shuttered electrical connector.

6. An appliance as claimed in claim 5 wherein the electrical connection system comprises a plug and socket electrical connector wherein a shutter (103) in the socket (Fig 2A) is displaceable by the plug (Fig 2B) to permit entry of the plug into the socket only if the shutter has a predetermined disposition relative to the socket, and wherein the plug is insertable into the socket irrespective of the relative rotational orientation of the plug and socket transversely to the direction of insertion of the plug into the socket.

7. An appliance as claimed in claim 5 wherein the electrical connection system comprises a plug part (Fig 2B) and a socket part (Fig 2A), the plug part being insertable into the socket part by relative movement between the two parts in a predetermined direction irrespective of the relative rotational orientation of the two parts transversely to said predetermined direction, and the shutter (103) being provided in the socket part (Fig 2A) and being displaceable therein for admitting the plug part (Fig 2B) only if the shutter (103) has a predetermined disposition, the shutter (103) being capable of adopting alternative dispositions within the socket part (Fig 2A), and the plug part (Fig 2B) being formed so as to hold the shutter (103) in said predetermined disposition so long as the plug part (Fig 2B) and socket part (Fig 2A) are approached to each other in said predetermined direction.

8. An appliance as claimed in claim 7 wherein the socket part (Fig 2A) comprises a circularly-cylindrical member (109) within which a shutter (103) having a circular section is axially displaceable so long as the shutter disposition is generally coaxial with the socket part, the arrangement being such that the shutter cannot be displaced within the socket if the shutter disposition is tilted out of coaxiality.

9. An appliance as claimed in claim 8 wherein a portion (114) of the shutter (103) is arranged to engage a portion (117) of the socket (Fig 2A) to prevent displacement of the shutter into the socket when the shutter disposition is out of coaxiality.

10. An appliance as claimed in claim 9 wherein the shutter (103) has a circularly-cylindrical portion (113) dimensioned to make a sliding fit within a corresponding portion (117) of the socket (Fig 2A), and entry of the circularly cylindrical portion (113) into such corresponding socket portion (117) is inhibited by engagement of the one part with the other if the shutter (103) is depressed in a tilted disposition.

11. An appliance as claimed in claim 8 or 9 or 10 wherein a circularly-cylindrical post (118) is provided within the circularly-cylindrical socket member (117), the post extending coaxially of the circularly-cylindrical socket member, and the shutter (103) is annular and is arranged to be displaceable within the annular space between the internal surface of the circularly-cylindrical socket member (117) and the external surface of the post (118).

12. An appliance as claimed in any of claims 8 to 11 wherein an electrical contact ring (105) is provided in said circularly-cylindrical socket member (117) and an electrical terminal (135) is provided on the plug part (Fig 2B) for contacting said contact ring when the plug and socket parts are operably engaged.

13. An appliance as claimed in claim 12 wherein the electrical terminal (135) provided on the plug part (Fig 2B) comprises a contact carried by a terminal spring near the surface of a member (132) of the plug (Fig 2B) which is adapted to be insertedinto the circularly-cylindrical socket member (117).

14. An appliance as claimed in claim 11, or as claimed in claim 12 or claim 13 as dependent upon claim 11, wherein an electrical contact ring (104) is provided on said post (118) and an electrical terminal (136) is provided on the plug part (Fig 2B) for contacting said contact ring on said post when the plug and socket parts are operably engaged.

15. An appliance as claimed in claim 14 wherein the electrical terminal (136) provided on the plug part (Fig 2B) for contacting the contact ring (104) on the post (118) comprises a contact carried by a terminal spring near the inner surface of a hollow member (132) of the plug which is adapted to be inserted into the annular space between the circularly-cylindrical socket member (117) and the post (118).

16. An appliance as claimed in any of claims 12 to 15 wherein the circularly-cylindrical socket member (117) and/or the post (118) respectively is provided with a portion (111;124) adjacent to the location of its respective contact ring (105;104) which is dimensioned so that the respective terminal (135;136) provided on the plug part (Fig 2B) does not drag across such portion during insertion and removal of the plug part (Fig 2B) into and from the socket Part (Fig 2A).

17. An appliance as claimed in any of claims 12 to 16 wherein the or each said contact ring (104,105) is formed of copper or of a copper alloy having a thermal conductivity approaching that of copper and has a thick plating layer of silver antimony alloy.

18. An appliance as claimed in claim 11, or as claimed in any of claims 12 to 17 as dependent upon claim 11, wherein said post (118) is hollow.

19. An appliance as claimed in claim 18 wherein an electrical contact (108) is provided within said hollow post (118) and a terminal pin (134) is provided on the plug part (Fig 2B) for entering into the hollow post (118) and contacting said electrical contact (108) when the plug and socket parts are operably engaged.

20. An appliance as claimed in any of the preeeding claims wherein the connector (Fig 5) that is provided on the base includes water-shedding formations (150).

21. An appliance as claimed in claim 20 wherein an annular rim of the connector that is provided on the base is formed with castellations, the inner surfaces of the upstands whereof form part of a female conical annulus serving to guide the vessel connector into the base connector, and the surfaces between the upstands whereof form part of a male conical annulus for encouraging the shedding of water between the castellations.

22. An appliance as claimed in any preceding claim wherein said x overtemperature disconnect device (160) comprises a bimetallic element serving to open a set of contacts in response to a heating element overtemperature condition.

23. An appliance as claimed in claim 22 wherein the overtemperature disconnect device (160) is provided above the connector of the vessel (Fig 2B) and underlying the vessel heating element (166).

## Patentansprüche

1. Schnurloses elektrisches Wasserkocher-Gerät, aufweisend:
einen Kessel mit einem Heizelement zum Erhitzen von Wasser in dem Kessel zum Kochen und mit einer dem Heizelement zugeordneten Übertemperatur-Trenneinrichtung (160) zum Trennen des Heizelements von seiner Stromversorgung im Fall einer Übertemperatur des Elements,
einen Sockel zur Verbindung mit einer elektrischen Stromversorgung,
einen elektrischen Verbinder (Figur 1; Figur 2A) an dem Sockel und einen komplementären elektrischen Verbinder (Figur 2B), der als integraler Teil der Übertemperatur-Trenneinrichtung am Kessel vorgesehen ist, wodurch das Heizelement in Abhängigkeit vom Zustand der Übertemperatur-Trenneinrichtung (160) über den Sockel gespeist werden kann, wenn der Kessel auf den Sockel aufgesetzt ist und die Verbinder miteinander verbunden sind, wobei die elektrischen Verbinder ein elektrisches Verbindungssystem darstellen, das im Betrieb eine Kopplung des Kessels mit dem Sockel über eine relative Drehorientierung von vollen 360° zwischen den entsprechenden Teilen erlaubt und an einem der beiden Verbinder ein erstes und ein zweites ringförmiges elektrisches Anschlußteil (104, 105), die konzentrisch zueinander angeordnet sind, und ein drittes Anschlußteil (108), das im wesentlichen mittig zu dem ersten und dem zweiten Anschlußteil angeordnet ist, aufweist, während der andere der beiden Verbinder komplementäre Federanschlußteile (134, 135, 136) zum Angriff an den Anschlußteilen (104, 105) des zuerst erwähnten Verbinders aufweist.

2. Gerät nach Anspruch 1, wobei die am Sockel und am Kessel vorgesehenen elektrischen Verbinder im wesentlichen mittig unter dem Kessel und auf der Oberseite des Sockels angeordnet sind.

3. Gerät nach einem der vorhergehenden Ansprüche, wobei die am Sockel (Figur 2A) und am Kessel (Figur 2B) vorgesehenen elektrischen Verbinder Phase-, Neutralleiter- und Erd-Anschlußteile (104, 105, 108; 134, 135, 136) aufweisen, die so angeordnet sind, daß die zusammenwirkenden Erd-Anschlußteile (108, 134) zuerst aneinander angreifen, wenn der Kessel auf seinen Sockel gesetzt wird, und sich zuletzt trennen, wenn der Kessel von seinem Sockel genommen wird.

4. Gerät nach einem der vorhergehenden Ansprüche, wobei die elektrischen Verbinder außen so geformt sind, daß sie deren Ineinandergreifen erleichtern, indem sie diese zusammenführen, wenn sie ungenau aneinanderliegen.

5. Gerät nach einem der vorhergehenden Ansprüche, wobei der am Sockel vorgesehene elektrische Verbinder (Figur 1, Figur 2A) ein mit Verschluß versehener elektrischer Verbinder ist.

6. Gerät nach Anspruch 5, wobei das elektrische Verbindungssystem einen elektrischen Stecker- und Buchsenverbinder aufweist, wobei vom Stecker (Figur 2B) ein Verschluß (103) in der Buchse (Figur 2A) verschiebbar ist, um einen Eintritt des Steckers in die Buchse lediglich dann zu erlauben, wenn der Verschluß eine bestimmte Anordnung relativ zur Buchse aufweist, und wobei der Stecker unabhängig von der quer zur Einführrichtung des Steckers in die Buchse auftretenden relativen Drehorientierung des Steckers und der Buchse in die Buchse einführbar ist.

7. Gerät nach Anspruch 5, wobei das elektrische Verbindungssystem ein Steckerteil (Figur 2B) und ein Buchsenteil (Figur 2A) aufweist, wobei das Steckerteil unabhängig von der quer zu einer vorbestimmten Richtung auftretenden relativen Drehorientierung der beiden Teile durch eine Relativbewegung zwischen den beiden Teilen in die vorbestimmte Richtung in das Buchsenteil einsteckbar ist und wobei der Verschluß (103) im Buchsenteil (Figur 2A) vorgesehen ist und darin verschiebbar ist, um das Steckerteil (Figur 2B) lediglich zuzulassen, wenn der Verschluß (103) eine vorbestimmte Anordnung aufweist, wobei der Verschluß (103) andere Anordnungen in dem Buchsenteil (Figur 2A) annehmen kann und das Steckerteil (Figur 2B) so ausgebildet ist, daß es den Verschluß (103) in der vorbestimmten Anordnung hält, solange sich das Steckerteil (Figur 2B) und das Buchsenteil (Figur 2A) einander in der vorbestimmten Richtung nähern.

8. Gerät nach Anspruch 7, wobei das Buchsenteil (Figur 2A) ein kreisförmig-zylindrisches Element (109) aufweist, innerhalb dessen ein Verschluß (103) mit kreisförmigem Querschnitt solange axial verschiebbar ist, wie die Anordnung des Verschlusses im wesentlichen koaxial zum Buchsenteil ist, wobei eine solche Einrichtung getroffen ist, daß der Verschluß in der Buchse nicht verschoben werden kann, wenn die Anordnung des Verschlusses aus der Koaxialen gekippt ist.

9. Gerät nach Anspruch 8, wobei ein Abschnitt (114) des Verschlusses (103) zum Angriff an einem Abschnitt (117) des Sockels (Figur 2A) eingerichtet ist, um ein Verschieben des Verschlusses in die Buchse zu verhindern, wenn sich die Anordnung des Verschlusses nicht koaxial befindet.

10. Gerät nach Anspruch 9, wobei der Verschluß (103) einen kreisförmig-zylindrischen Abschnitt (113) aufweist, der so dimensioniert ist, daß er eine gleitende Passung innerhalb eines entsprechenden Abschnitts (117) der Buchse (Figur 2A) aufweist, und wobei der Eintritt des kreisförmig zylindrischen Abschnitts (113) in diesen entsprechenden Buchsenabschnitt (117) durch Angriff des einen Teils an dem anderen verhindert wird, wenn der Verschluß (103) in gekippter Anordnung niedergedrückt wird.

11. Gerät nach Anspruch 8, 9 oder 10, wobei in dem kreisförmig-zylindrischen Buchsenelement (117) ein kreisförmigzylindrischer Stift (118) vorgesehen ist, der koaxial zu jenem verläuft, und wobei der Verschluß (103) ringförmig ist und innerhalb des ringförmigen Raums zwischen der Innenfläche des kreisförmig-zylindrischen Buchsenelements (117) und der Außenfläche des Stifts (118) verschiebbar ist.

12. Gerät nach einem der Ansprüche 8 bis 11, wobei in dem kreisförmig-zylindrischen Buchsenelement (117) ein Kontaktring (105) vorgesehen ist und am Steckerteil (Figur 2B) ein elektrischer Anschluß (135) vorgesehen ist, um mit dem Kontaktring in Kontakt zu treten, wenn das Steckerteil und das Buchsenteil im Betrieb ineinander eingreifen.

13. Gerät nach Anspruch 12, wobei der am Steckerteil (Figur 2B) vorgesehene elektrische Anschluß (135) einen Kontakt aufweist, der von einer Anschlußfeder nahe der Oberfläche eines Elements (132) des Steckers (Figur 2B) getragen wird, das in das kreisförmig-zylindrische Buchsenelement (117) einführbar ist.

14. Gerät nach Anspruch 11 oder nach Anspruch 12 oder 13, sofern von Anspruch 11 abhängig, wobei am Stift (118) ein elektrischer Kontaktring (104) vorgesehen ist und am Steckerteil (Figur 2B) ein elektrischer Kontakt (136) zum Kontakt mit dem Kontaktring am Stift, wenn das Steckerteil und das Buchsenteil im Betrieb ineinandergreifen, vorgesehen ist.

15. Gerät nach Anspruch 14, wobei der am Steckerteil (Figur 2B) vorgesehene elektrische Anschluß (136) zum Kontakt mit dem Kontaktring (104) am Stift (118) einen Kontakt aufweist, der von einer Kontaktfeder nahe der Innenfläche eines hohlen Elements (132) des Steckers getragen wird, das in den ringförmigen Raum zwischen dem kreisförmig-zylindrischen Buchsenelement (117) und dem Stift (118) einführbar ist.

16. Gerät nach einem der Ansprüche 12 bis 15, wobei das kreisförmig-zylindrische Buchsenelement (117) und/oder der Stift (118) entsprechenderweise einen Abschnitt (111; 124) beim Ort seines entsprechenden Kontaktrings (105, 104) aufweist, der so dimensioniert ist, daß der entsprechende Anschluß (135; 136) am Steckerteil (Figur 2B) während des Einführens und Entfernens des Steckerteils (Figur 2B) in und aus dem Buchsenteil (Figur 2A) nicht über diesen Abschnitt schleift.

17. Gerät nach einem der Ansprüche 12 bis 16, wobei der bzw. jeder Kontaktring (104, 105) aus Kupfer oder einer Kupferlegierung mit einer an Kupfer angenäherten Wärmeleitfähigkeit ausgebildet ist und eine dicke Beschichtungsschicht aus einer Silber-Antimon-Legierung aufweist.

18. Gerät nach Anspruch 11 oder nach einem der Ansprüche 12 bis 17, sofern von Anspruch 11 abhängig, wobei der Stift (118) hohl ist.

19. Gerät nach Anspruch 18, wobei in dem hohlen Stift (118) ein elektrischer Kontakt (108) vorgesehen ist und am Steckerteil (Figur 2B) ein Anschlußstift (134) zum Eintritt in den hohlen Stift (118) und zum Kontakt mit dem elektrischen Kontakt (108), wenn das Steckerteil und das Buchsenteil im Betrieb ineinandergreifen, vorgesehen ist.

20. Gerät nach einem der vorhergehenden Ansprüche, wobei der am Sockel vorgesehene Verbinder (Figur 5) Wasserablaufstrukturen (150) aufweist.

21. Gerät nach Anspruch 20, wobei ein ringförmiger Rand des am Sockel vorgesehenen Verbinders mit Zackungen ausgebildet ist, wobei die Innenflächen der Zähne der Zackungen Teil eines konischen Aufnahmerings bilden, der dazu dient, den Kesselverbinder in den Sockelverbinder zu führen, und wobei die Flächen zwischen den Zähnen der Zackungen Teil eines konischen Außenrings zur Förderung des Ablaufens von Wasser zwischen den Zackungen bilden.

22. Gerät nach einem der vorhergehenden Ansprüche, wobei die Übertemperatur-Trenneinrichtung (160) ein Bimetallelement aufweist, das dem Öffnen eines Kontaktsatzes in Reaktion auf einen Übertemperaturzustand des Heizelements dient.

23. Gerät nach Anspruch 22, wobei die Übertemperatur-Trenneinrichtung (160) über dem Verbinder des Kessels (Figur 2B) und unter dem Kessel-Heizelement (166) liegend vorgesehen ist.

## Revendications

1. Dispositif électrique sans fil pour faire bouillir de l'eau, comportant : un récipient muni d'un élément chauffant pour chauffer l'eau située dans le récipient afin de la porter à ébullition, et muni d'un dispositif de déconnexion en cas de surchauffe (160) associé audit élément chauffant pour déconnecter l'élément chauffant de son alimentation électrique dans un état de surchauffe de l'élément, une base pour connexion à une alimentation en puissance électrique, un connecteur électrique (figure 1 ; figure 2A) agencé sur la base et un connecteur électrique complémentaire (figure 2B), formé sous la forme d'une partie en un seul bloc dudit dispositif de déconnexion en cas de surchauffe, agencé sur le récipient, de sorte que, selon l'état dudit dispositif de déconnexion en cas de surchauffe (160), l'élément chauffant situé dans le récipient peut être alimenté via la base lorsque le récipient est placé sur la base et que lesdits connecteurs sont connectés l'un à l'autre, lesdits connecteurs électriques constituant un système de connexion électrique permettant au récipient d'être accouplé de manière opérationnelle à la base d'un bout à l'autre des 360° d'une orientation de rotation relative entre les parties respectives, ledit système de connexion électrique comportant, sur un premier des deux connecteurs, des première et deuxième parties annulaires formant bornes électriques (104, 105) agencées de manière concentrique l'une par rapport à l'autre, et une troisième partie formant borne (108) agencée de manière générale au centre desdites première et deuxième parties formant bornes, et l'autre des deux connecteurs ayant des parties formant bornes élastiques complémentaires (134, 135, 136) adaptées pour venir en prise avec les parties formant bornes (104, 105) du premier connecteur mentionné.

2. Dispositif selon la revendication 1, dans lequel les connecteurs électriques qui sont agencés sur la base et sur le récipient sont généralement positionnés de manière centrale sous le récipient et sur le côté supérieur de la base.

3. Dispositif selon l'une quelconque des revendications précédentes, dans lequel les connecteurs électriques agencés sur la base (figure 2A) et sur le récipient (figure 2B) comportent des parties formant bornes sous tension, neutre et de terre (104, 105, 108 ; 134, 135, 136) agencées de telle sorte que les parties formant bornes de terre coopérantes (108; 134) viennent en prise d'abord lorsque le récipient est placé sur sa base, et se libèrent enfin lorsque le récipient est enlevé de sa base.

4. Dispositif selon l'une quelconque des revendications précédentes, dans lequel lesdits connecteurs électriques sont mis en forme extérieurement pour faciliter leur appariement en les guidant ensemble aussitôt qu'ils sont en prise de manière imprécise.

5. Dispositif selon l'une quelconque des revendications précédentes, dans lequel le connecteur électrique (figure 1 ; figure 2A) qui est agencé sur la base est un connecteur électrique sécurisé.

6. Dispositif selon la revendication 5, dans lequel le système de connexion électrique comporte un connecteur électrique à fiche et à prise, dans lequel un obturateur (103) situé dans la prise (figure 2A) peut être déplacé par la fiche (figure 2B) pour permettre l'entrée de la fiche dans la prise uniquement si l'obturateur a une disposition prédéterminée par rapport à la prise, et dans lequel le bouchon peut être inséré dans la prise quelle que soit l'orientation de rotation relative de la fiche et de la prise transversalement à la direction d'insertion de la fiche dans la prise.

7. Dispositif selon la revendication 5, dans lequel le système de connexion électrique comporte une partie de fiche (figure 2B) et une partie de prise (figure 2A), la partie de fiche pouvant être insérée dans la partie de prise par un déplacement relatif entre les deux parties dans une direction prédéterminée quelle que soit l'orientation de rotation relative des deux parties transversalement à ladite direction prédéterminée, et l'obturateur (103) étant agencé dans la partie de prise (figure 2A), et pouvant être déplacé dans celle-ci pour admettre la partie de fiche (figure 2B) uniquement si l'obturateur (103) a une disposition prédéterminée, l'obturateur (103) pouvant prendre des positions en variante dans la partie de prise (figure 2A), et la partie de fiche (figure 2B) étant formée de manière à maintenir l'obturateur (103) dans ladite disposition prédéterminée aussi longtemps que la partie de fiche (figure 2B) et la partie de prise (figure 2A) sont approchées l'une de l'autre dans ladite direction prédéterminée.

8. Dispositif selon la revendication 7, dans lequel la partie de prise (figure 2A) comporte un élément circulairement cylindrique (109) dans lequel un obturateur (103) ayant une coupe circulaire peut être déplacé axialement aussi longtemps que la disposition de l'obturateur est de manière générale coaxiale à la partie de prise, l'agencement étant tel que l'obturateur ne peut pas être déplacé dans la prise si la disposition de l'obturateur est basculée et n'est plus coaxiale.

9. Dispositif selon la revendication 8, dans lequel une partie (114) de l'obturateur (103) est agencée pour venir en prise avec une partie (117) de la prise (figure 2A) pour empêcher un déplacement de l'obturateur dans la prise lorsque la disposition de l'obturateur n'est plus coaxiale.

10. Dispositif selon la revendication 9, dans lequel l'obturateur (103) a une partie circulairement cylindrique (113) dimensionnée pour réaliser un agencement coulissant dans une partie correspondante (117) de la prise (figure 2A), et l'entrée de la partie circulairement cylindrique (113) dans une telle partie de prise correspondante (117) est empêchée par la coopération de la première partie avec l'autre si l'obturateur (103) est enfoncée dans une disposition basculée.

11. Dispositif selon la revendication 8, 9 ou 10, dans lequel un montant circulairement cylindrique (118) est agencé dans l'élément de prise circulairement cylindrique (117), le montant s'étendant coaxialement par rapport à l'élément de prise circulairement cylindrique, et l'obturateur (103) est annulaire, et est agencé pour pouvoir être déplacé dans l'espace annulaire situé entre la surface intérieure de l'élément de prise circulairement cylindrique (117) et la surface extérieure du montant (118).

12. Dispositif selon l'une quelconque des revendications 8 à 11, dans lequel un anneau de contact électrique (105) est agencé dans ledit élément de prise circulairement cylindrique (117), et une borne électrique (135) est agencée sur la partie de fiche (figure 2B) pour établir un contact avec ledit anneau de contact lorsque les parties de fiche et de prise sont en prise opérationnelle.

13. Dispositif selon la revendication 12, dans lequel la borne électrique (135) agencée sur la partie de fiche (figure 2B) comporte un contact porté par un ressort de borne proche de la surface d'un élément (132) de la fiche (figure 2B) qui est adapté pour être inséré dans l'élément de prise circulairement cylindrique (117).

14. Dispositif selon la revendication 11, ou selon la revendication 12 ou la revendication 13 lorsque dépendante de la revendication 11, dans lequel un anneau de contact électrique (104) est agencé sur ledit montant (118), et une borne électrique (136) est agencée sur la partie de fiche (figure 2B) pour établir un contact avec ledit anneau de contact situé sur ledit montant lorsque les parties de fiche et de prise sont en prise opérationnelle.

15. Dispositif selon la revendication 14, dans lequel la borne électrique (136) agencée sur la partie de fiche (figure 2B) pour établir un contact avec l'anneau de contact (104) situé sur le montant (118) comporte un contact porté par un ressort de borne à proximité de la surface intérieure d'un élément creux (132) de la fiche qui est adapté pour être inséré dans l'espace annulaire situé entre l'élément de prise circulairement cylindrique (117) et le montant (118).

16. Dispositif selon l'une quelconque des revendications 12 à 15, dans lequel l'élément de prise circulairement cylindrique (117) et/ou le montant (118) est respectivement muni d'une partie (111 ; 124) adjacente à l'emplacement de son anneau de contact respectif (105 ; 104) qui est dimensionnée de sorte que la borne respective (135 ; 136) agencée sur la partie de fiche (figure 2B) ne s'éternise pas à travers une telle partie pendant une insertion et un enlèvement de la partie de fiche (figure 2b) dans la partie de prise (figure 2A), et à partir de celle-ci.

17. Dispositif selon l'une quelconque des revendications 12 à 16, dans lequel l'anneau de contact ou chaque anneau de contact (104, 105) est constitué de cuivre ou d'un alliage de cuivre ayant une conductivité thermique approchant celle du cuivre, et a une couche de placage épaisse constituée d'un alliage d'antimoine d'argent.

18. Dispositif selon la revendication 11, ou selon l'une quelconque des revendications 12 à 17 lorsque dépendante de la revendication 11, dans lequel ledit montant (118) est creux.

19. Dispositif selon la revendication 18, dans lequel un contact électrique (108) est agencé dans ledit montant creux (118), et une broche de borne (134) est agencée sur la partie de fiche (figure 2B) pour entrer dans le montant creux (118) et établir un contact avec ledit contact électrique (108) lorsque les parties de fiche et de prise sont en prise opérationnelle.

20. Dispositif selon l'une quelconque des revendications précédentes, dans lequel le connecteur (figure 5) qui est agencé sur la base comporte des formations de déversement d'eau (150).

21. Dispositif selon la revendication 20, dans lequel un rebord annulaire du connecteur qui est agencé sur la base est muni de créneaux, dont les surfaces intérieures des parties verticales forment une partie d'un espace annulaire conique femelle servant à guider le connecteur de récipient dans le connecteur de base, et les surfaces situées entre les parties verticales de ceux-ci forment une partie d'un espace annulaire conique mâle pour encourager le déversement d'eau entre les créneaux.

22. Dispositif selon l'une quelconque des revendications précédentes, dans lequel ledit dispositif de déconnexion en cas de surchauffe (160) comporte un élément bimétallique servant à ouvrir un ensemble de contacts en réponse à un état de surchauffe de l'élément chauffant.

23. Dispositif selon la revendication 22, dans lequel le dispositif de déconnexion en cas de surchauffe (160) est agencé au-dessus du connecteur du récipient (figure 2B) et en dessous de l'élément chauffant du récipient (166).
